# EUROPÄISCHE PATENTSCHRIFT

(11) **EP 3 979 394 B1**
(45) Veröffentlichungstag und Bekanntmachung des Hinweises auf die Patenterteilung: **02.12.2026**
(21) Anmeldenummer: 21200930.2
(22) Anmeldetag: 05.10.2021
(51) Int. Cl.: F28F 3/06, H01M 10/60, H01M 10/6554, H01M 10/6567, F28D 1/03

(54) **WANDELEMENT ZUM AUFBAU EINES GEHÄUSES**
WALL ELEMENT FOR MOUNTING A HOUSING
ÉLÉMENT MURAL DESTINÉ À LA CONSTRUCTION D'UN LOGEMENT

(30) Priorität: 05.10.2020 DE 102020126036
(43) Veröffentlichungstag der Anmeldung: 06.04.2022
(73) Patentinhaber: Torqeedo GmbH, 82234 Weßling (DE)
(72) Erfinder: Despineux, Frank, 82234 Weßling (DE); Schmidt, Juri, 81241 München (DE); Wiedersatz, Dieter, 86156 Augsburg (DE)
(74) Vertreter: Nordmeyer, Philipp Werner

(56) Entgegenhaltungen:
- WO-A1-2020/009997
- WO-A1-2020/033139
- US-A1- 2012 171 543

## Beschreibung

### Technisches Gebiet

Die vorliegende Erfindung betrifft ein Wandelement zum Aufbau eines Gehäuses zur Aufnahme eines Energiespeichers oder zum Erstellen einer Kühlplatte, umfassend eine Grundplatte und einen in der Grundplatte ausgebildeten Strömungskanal mit einem Strömungsquerschnitt zur Durchströmung mit einem Kühlmedium. Die vorliegende Erfindung betrifft ferner ein Herstellungsverfahren für ein solches Wandelement. Außerdem betrifft die vorliegende Erfindung eine Wandstruktur, umfassend eine Vielzahl von solchen Wandelementen.

### Stand der Technik

Es ist bekannt, in Wandelementen zur Kühlung von einer Vielzahl von Anwendungen Grundplatten vorzusehen, die im Inneren einen Strömungskanal aufweisen. Beispiele für solche Anwendungen sind etwa Wandelemente zum Aufbau eines Gehäuses, das zur Aufnahme eines Energiespeichers zum Aufbau einer Batterie verwendet werden kann, insbesondere einer Antriebsbatterie. Andere Beispiele sind Kühlplatten innerhalb eines Gehäuses oder Kühlplatten zur Kühlung von Elektronikkomponenten. Durch den Strömungskanal im Inneren der Grundplatte kann gegebenenfalls ein Kühlmedium zur Kühlung des Energiespeichers strömen. Derartige Grundplatten sind so ausgeführt, dass sie sowohl die Funktion eines tragenden Elements als auch die Funktion einer Kühlplatte erfüllen. Um die Funktion des tragenden Elements zu gewährleisten, müssen die Wandstärken dieser Grundplatten entsprechend stark ausgeführt sein. Alternativ können die Abstände zwischen den einzelnen Wänden der Grundplatte vergrößert werden, um die Tragfähigkeit zu erreichen. Dadurch erhält aber ein in der Grundplatte vorgesehener Strömungskanal ebenfalls einen großen Querschnitt, was dazu führen kann, dass entweder eine zu geringe Fließgeschwindigkeit eines verwendeten Kühlmediums erreicht wird, oder ein hoher Volumenstrom notwendig ist, um eine gewünschte Fließgeschwindigkeit zu erreichen.

Die US 2012/0171543 A1 offenbart eine Vorrichtung zur thermischen Anbindung eines Energiespeichers.

Die WO 2020/009997 A1 offenbart eine Batterie-Kühlplatte und eine Fluid-Verteilereinheit.

Die WO 2020/033139 A1 offenbart eine Batterie-Kühlplatte.

### Darstellung der Erfindung

Ausgehend von dem bekannten Stand der Technik ist es eine Aufgabe der vorliegenden Erfindung, ein verbessertes Wandelement bereitzustellen.

Die Aufgabe wird durch ein Wandelement mit den Merkmalen des Anspruchs 1 gelöst. Vorteilhafte Weiterbildungen ergeben sich aus den Unteransprüchen, der Beschreibung und den Figuren.

Entsprechend wird ein Wandelement zum Aufbau eines Gehäuses zur Aufnahme eines Energiespeichers oder zum Erstellen einer Kühlplatte vorgeschlagen, welches eine Grundplatte und einen in der Grundplatte ausgebildeten Strömungskanal umfasst, welcher einen Strömungsquerschnitt zur Durchströmung mit einem Kühlmedium bereitstellt. Erfindungsgemäß ist eine im Strömungskanal angeordnete Einlage zur Reduzierung des Strömungsquerschnitts und zur Erhöhung der Fließgeschwindigkeit des Kühlmediums in dem Strömungsquerschnittvorgesehen.

Unter einem Wandelement im Sinne der vorliegenden Offenbarung kann ein Bauteil verstanden werden, das im eingebauten Zustand die Funktion eines tragenden Elements erfüllen muss, insbesondere die Funktion eines tragenden Wandelements eines Gehäuses zur Aufnahme eines Energiespeichers oder die Funktion einer Kühlplatte. Das Wandelement ist demnach so ausgebildet, dass es von außen einwirkende Kräfte aufnimmt beziehungsweise Kraftflüsse leitet, welche erheblich größer sind als Kräfte, die etwa aus dem Eigengewicht des Wandelements resultieren. Das Gleiche gilt für den Fall, dass das Wandelement rein die Funktion einer Kühlplatte zu erfüllen hat.

Das Wandelement kann eine Kühlplatte innerhalb eines Gehäuses sein. Beispielsweise kann das Wandelement einen Boden eines Gehäuses zur Aufnahme eines Energiespeichers ausbilden. Alternativ kann das Wandelement eine generische Kühlplatte sein, die als Wandelement eine Festigkeit aufweist, welche dem Wandelement eine Eignung als strukturelles oder tragendes Element ermöglicht.

Unter einem Energiespeicher, der nicht Teil der vorliegenden Offenbarung ist, kann allgemein ein Reservoir mit einem zu kühlenden Medium verstanden werden, das thermisch mit dem Wandelement koppelbar ist. Der Energiespeicher kann beispielsweise durch eine oder mehrere Batteriezellen oder eines oder mehrere Batteriemodule ausgebildet sein, die in dem Gehäuse aufgenommen werden sollen um beispielsweise eine Antriebsbatterie für einen Elektromotor bereit zu stellen.

Sofern nicht anders gekennzeichnet, beziehen sich in der vorliegenden Offenbarung alle behandelten Wärme- und Stofftransportphänomene, losgelöst von einem etwaig vorhandenen Energiespeicher oder einem anderen angrenzenden Bauteil oder Volumen, allein auf das Wandelement.

Durch die Anordnung der Einlage im Strömungskanal kann in diesem eine Volumenverdrängung erfolgen, die eine Reduzierung des Strömungsquerschnitts erreicht. Bei gleichem Volumenstrom des Kühlmediums stellt sich damit, verglichen mit einer Durchströmung des Strömungskanals ohne Einlage, eine höhere Fließgeschwindigkeit des Kühlmediums ein.

Ergänzend kann durch die Anordnung der Einlage im Strömungskanal eine Umlenkung des Kühlmediums erfolgen, durch die sich ebenfalls eine zumindest lokal erhöhte Fließgeschwindigkeit einstellt.

Durch die erhöhte Fließgeschwindigkeit werden verstärkt Turbulenzen in dem Kühlmedium erzeugt, die wiederum zu einem verbesserten Wärmeübergang zwischen der Grundplatte und dem Kühlmedium führen. Dadurch wird letztlich der thermische Wirkungsgrad des Wandelements zur Kühlung eines Energiespeichers erhöht.

Im Ergebnis kann durch die Anwesenheit der Einlage bei gleichem Volumenstrom ein höherer thermischer Wirkungsgrad erzielt werden. Gleichwohl kann der thermische Wirkungsgrad, der ohne Einlage erzielt wird, bei einem geringeren Volumenstrom erzielt werden, wenn die Einlage im Strömungskanal angeordnet ist.

Die aufgrund der Einlage erhöhte Strömungsgeschwindigkeit hat ferner den Vorteil, dass weniger Totwassergebiete im Strömungskanal auftreten, wodurch der thermische Wirkungsgrad des Wandelements erhöht werden kann und ein homogenerer Wärmeübertrag erreicht werden kann.

Der thermische Wirkungsgrad gibt das Verhältnis von aufgenommener zu abgegebener thermischer Energie wieder - also wie viel Prozent der Wärme tatsächlich zwischen den betreffenden Medien transferiert wurde.

Die vorliegende Offenbarung wird überwiegend anhand eines Wandelement veranschaulicht, das zur Kühlung eines Energiespeichers ein Kühlmedium verwendet. Dies hat jedoch beispielhaften Charakter und ist nicht einschränkend zu verstehen. Den gleichen Gesetzmäßigkeiten folgend kann anstelle eines Kühlmediums auch ein Heizmedium zum Erwärmen eines Energiespeichers verwendet werden.

Unter einem Kühlmedium kann ein Fluid verstanden werden, das den Strömungskanal in einem zumindest teilweise flüssigen Aggregatzustand durchströmt. Hierbei handelt es sich typischerweise um Kühlwasser. Unter Kühlwasser kann im Sinne der vorlegenden Offenbarung etwa Wasser oder ein anderes Fluid verstanden werden, insbesondere ein sogenanntes Kältemittel (z.B. R134 a) aber auch eine Mischung von Fluiden, z.B. eine Mischung, die aus 50 % Wasser und 50 % Glycol besteht. Mithin kann unter einem Kühlwasser auch ein gasförmiges Medium und/oder ein Medium in unterschiedlichen Aggregatzuständen verstanden werden. Wird etwa ein Kältemittel (z.B. R134 a) verwendet, kann das Kühlwasser in dem Wandelement gemäß der vorliegenden Offenbarung ganz oder teilweise expandiert vorliegen und entsprechend ganz oder teilweise in einem gasförmigen Aggregatzustand vorliegen.

Unter dem Begriff Totwassergebiet können im Sinne der vorliegenden Offenbarung allgemein Kühlmedienbereiche verstanden werden, die nicht oder nur zum Teil dem Hauptströmungspfad folgen. Beispielsweise können damit stationäre Fluidwirbel gemeint sein, die sich in Randbereichen, insbesondere in Ecken, des Fluidkanals ausbilden. Mithin unterscheiden sich Totwassergebiete dadurch vom Hauptströmungspfad, dass der Fluidtransport in Richtung Hauptströmungspfad in diesen Bereichen verlangsamt ist oder ganz zum Erliegen gekommen ist. Wie zuvor erwähnt wirkt sich die Fließgeschwindigkeit des Kühlmediums unmittelbar auf den Wärmetransport im Wandelement aus. Ferner können Totwassergebiete Druckverluste hervorrufen, da sie eine Strömungsbarriere für den Hauptströmungspfad darstellen können.

Mithin wird durch Totwassergebiete der thermische Wirkungsgrad reduziert und die Homogenität der Wärmeübertragung reduziert, so dass eine Reduzierung des Auftretens von Totwassergebieten eine Verbesserung der Eigenschaften ergibt.

Gemäß einer vorteilhaften Weiterbildung weist die Einlage Turbulatoren zum Erzeugen von Turbulenzen im Kühlmedium auf, wobei die Turbulatoren vorzugsweise Vorsprünge und/oder Einbuchtungen aufweisen, und/oder wobei vorzugsweise die Turbulatoren durchgängige Strukturen aufweisen, insbesondere Drähte, Zylinder, Beulen, Mulden, und/oder Oberflächenrauigkeiten. Bevorzugt sind die Turbulatoren einstückig mit der Einlage ausgebildet.

Turbulatoren können im Sinne der vorliegenden Offenbarung als Strömungswiderstände aufgefasst werden, mittels der Turbulenzen im Kühlmedium erzeugt werden, wodurch letztlich der Wärmeübergang zwischen der Grundplatte und/oder der Einlage und dem Kühlmedium verbessert werden kann. Im Ergebnis kann mittels Turbulatoren der thermische Wirkungsgrad des Wandelements erhöht werden.

Beispielsweise kann durch die Turbulatoren die kritische Reynoldszahl Reₖᵣᵢₜ bereits bei geringeren Volumenströmen erreicht werden. Auch bei einem überwiegend laminaren Strömungsprofil des Kühlmediums können Turbulatoren lokale, temporäre Turbulenzfelder erzeugen, wodurch ebenfalls der thermische Wirkungsgrad des Wandelements erhöht werden kann. Zudem können thermisch isolierende Grenzschichten des Kühlmediums, sogenannte Randschichten aufgebrochen werden. Dadurch kann der Wärmetransport zwischen Kühlmedium und Einlage verbessert werden.

Dadurch, dass die Turbulatoren auf der Einlage ausgebildet sind, sind keine weiteren Einzelteile zur Erzeugung von Turbulenz notwendig. Mithin sind beliebige Geometrien von Turbulatoren auf der Einlage ohne erhöhten Fertigungs- und Montageaufwand realisierbar.

Das Vorsehen von Turbulatoren in Form von Vorsprüngen und/oder Einbuchtungen hat den Vorteil, dass diese einfach und kostengünstig in die Oberflächen der Einlage eingebracht werden können. Durchgängige Strukturen, insbesondere Drähte, Zylinder oder dergleichen als Turbulatoren haben den Vorteil, dass diese einfach und kostengünstig in oder entlang der Einlage eingebracht werden können. Unter dem Begriff "durchgängig" kann einerseits eine in Strömungsrichtung durchgängige Geometrie gemeint sein. Andererseits kann damit auch etwa ein Durchgehen von der unteren zur oberen Oberfläche des Strömungskanals gemeint sein. Turbulatoren in Form von Oberflächenrauigkeiten haben den Vorteil, dass diese einfach und kostengünstig in die Oberflächen der Einlage eingebracht werden können und zudem gut theoretisch berechenbar sind.

Vorteilhafterweise sind die Turbulatoren gezielt so ausgebildet, dass der durch die Turbulatoren im Kühlmedium erzeugte Druckverlust beim Durchströmen des Strömungskanals geringer als 10 % ist, vorzugsweise geringer als 1 %, verglichen mit dem Druckverlust, der beim Durchströmen des Strömungskanals bei gleichem Volumenstrom von Kühlmedium ohne Turbulatoren anliegt. Dadurch kann der thermische Wirkungsgrad bei gleichzeitig nur geringer Druckverluststeigerung verbessert werden, wodurch der Gesamtwirkungsgrad des übergeordneten Systems verbessert wird.

Vorteilhafterweise weist die Einlage zumindest ein Strömungsdurchtrittelement zur Umlenkung des Kühlmediums auf. Im Sinne der vorliegenden Offenbarung kann unter einem Strömungsdurchtrittelement ein Element verstanden werden, welches das Kühlmedium in eine neue Strömungsrichtung umlenkt. Diese neue Strömungsrichtung kann beispielsweise ein ausgebildetes Strömungsprofil in der neuen Strömungsrichtung aufweisen. Das Strömungsdurchtrittelement kann auch in Form einer einfachen Öffnung in der Einlage vorgesehen sein, mittels welcher der Durchtritt des Kühlmediums von einer Seite der Einlage auf eine andere Seite der Einlage erreicht wird.

Dadurch, dass das Strömungsdurchtrittelement in der Einlage ausgebildet ist, sind keine weiteren Einzelteile zur Strömungsumlenkung notwendig. Mithin sind beliebige Geometrien von Strömungsdurchtrittelementen auf der Einlage ohne erhöhten Fertigungs- und Montageaufwand realisierbar.

Die Umlenkung der Strömung über Strömungsdurchtrittelemente hat den Vorteil, dass gezielt noch kaltes Kühlmedium an zu kühlende Stellen geleitet werden kann und entsprechend bereits erwärmtes Kühlmedium anderen Stellen zugeleitet werden kann. Insbesondere kann durch eine geeignete Umlenkung der Strömung eine thermische Isolation der Grundplatte nach außen zur Umgebung hin erzielt werden.

In einer vorteilhaften Weiterbildung kann das Kühlmedium durch geeignet angeordnete Strömungsdurchtrittelemente gezielt auf einen oder mehrere Turbulatoren geleitet beziehungsweise beschleunigt werden, die dann eine lokale Turbulenz im Kühlmedium erzeugen, wodurch der thermische Wirkungsgrad des Wandelements verbessert werden kann.

In einer vorteilhaften Weiterbildung weist die Einlage ein Strömungsdurchtrittelement auf, welches ausgebildet ist, um den Strömungskanal in zumindest zwei fluidisch verbundene Teilkanäle zu unterteilen, sodass beim Durchströmen des Strömungskanals mit Kühlmedium das Kühlmedium von dem ersten Teilkanal in den zweiten Teilkanal strömt.

Vorteilhafterweise weist die Einlage ein Strömungsdurchtrittelement auf, welches ausgebildet ist, um innerhalb des zumindest einen Teilkanals solch eine Umlenkung des Kühlmedium zu erzeugen, dass ein beim Durchströmen ausgebildeter Hauptströmungspfad des Kühlmediums länger ist als die Länge des betreffenden Teilkanals. Mit anderen Worten kann mit Hilfe des Strömungsdurchtrittelements eine Trennung des Volumens in zwei fluidisch miteinander verbundene Teilkanäle erfolgen. Dadurch vergrößert sich die Wegstrecke, die das Kühlmedium in dem Wandelement zurücklegen muss, bevor das Kühlmedium wieder aus dem Wandelement austritt.

Dadurch kann gezielt noch kaltes Kühlmedium an zu kühlende Stellen geleitet werden und entsprechend bereits erwärmtes Kühlmedium anderen Stellen zugeleitet werden. Insbesondere kann durch eine geeignete Umlenkung der Strömung auch eine thermische Isolation der Grundplatte nach außen zur Umgebung hin erzielt werden. Dies kann beispielsweise dadurch erfolgen, dass gewisse Bereiche der Grundplatte, die thermisch isoliert werden sollen, nicht mit Kühlmedium in Kontakt stehen. Dies kann etwa mittels eines Hohlraums realisiert werden, der zwischen Grundplatte und Kühlmedium ausgebildet ist.

In einer vorteilhaften Weiterbildung weist die Grundplatte zwei parallel beanstandete Teilplatten auf, wobei sich der Strömungskanal zwischen den Teilplatten erstreckt. Dadurch kann eine einfache Fertigung sowie einfach und wiederholbar zu dimensioniere Grundplatten sowie Einlagen vorgesehen werden.

Vorteilhafterweise weist die Grundplatte weiterhin einen Einlass und einen Auslass auf, wobei der Einlass und/oder der Auslass orthogonal zur Oberfläche der Grundplatte angeordnet ist.

Über den Einlass und den Auslass kann die Grundplatte in einfacher Art und Weise in einen Kreislauf von Kühlmedium integriert werden. Dadurch, dass der Einlass und/oder der Auslass orthogonal zur Oberfläche der Grundplatte angeordnet ist, können etwaige Anschlüsse zur Umgebung hin so ausgebildet werden, die Grundplatte in ihrer Eigenschaft als Tragstruktur nicht oder nur gering beeinträchtigt wird.

Gemäß einer vorteilhaften Weiterbildung münden der Einlass und/oder der Auslass in einen Einlasskanal beziehungsweise Auslasskanal, wobei der Einlasskanal und/oder der Auslasskanal zumindest teilweise durch die Einlage ausgebildet ist beziehungsweise wird. Dadurch kann die Strömungsführung innerhalb der Grundplatte optimiert werden. Insbesondere kann gezielt noch kaltes Kühlmedium an zu kühlende Stellen geleitet werden und entsprechend bereits erwärmtes Kühlmedium anderen Stellen zugeführt werden. Dadurch kann der thermische Wirkungsgrad des Wandelements verbessert werden.

Vorteilhafterweise bildet die Einlage im Strömungskanal Hohlräume aus, die nicht von Kühlmedium durchströmt werden. Derartige Hohlräume können sich vollflächig oder teilweise entlang einer inneren Oberfläche der Grundplatte erstrecken. Ein Vorteil derartiger Hohlräume ist, dass diese Hohlräume das Wandelement zur Umgebung hin thermisch isolieren. Gleichwohl kann durch derartige Hohlräume die Volumenverdrängung innerhalb des Strömungskanals weiter reduziert werden. Alle diese genannten Maßnahmen können einzeln oder zusammen zu einer Verbesserung des thermischen Wirkungsgrads des Wandelements führen.

Vorteilhafterweise weist die Grundplatte eine im Wesentlichen rechteckige Grundfläche auf und weist entlang einer Außenseite Befestigungsmittel auf. Dadurch kann entlang der Außenseiten die Einlage auf einfache Art und Weise in das Wandelement eingeführt werden. Durch das Vorhandensein von Befestigungsmitteln auf zumindest einer Außenseite können mehrere Grundplatten bausteinartig verbunden werden. Dadurch kann die Montage und Wartung von Wandelementen verbessert werden.

In einer weiteren bevorzugten Ausbildung weist die Einlage mindestens eine Unterteilung auf, die gemeinsam mit der Grundplatte einen separaten Strömungskanal ausbildet. Auf diese Weise kann der in der Grundplatte vorgesehene Strömungskanal weiter unterteilt werden und auf diese Weise eine bevorzugte Anströmung der Grundplatte erreicht werden.

Gemäß einer vorteilhaften Weiterbildung ist die Grundplatte als Strangpressteil ausgebildet, bevorzugt als Aluminiumstrangpressteil. Ein Vorteil des Aluminiumstrangpressverfahrens ist die deutlich verbesserte thermische Leitfähigkeit von Aluminium gegenüber etwa Stahl, wodurch der Wärmetransport im Wandelement verbessert wird und letztlich der thermische Wirkungsgrad erhöht werden kann.

In einer vorteilhaften Weiterbildung weist die Einlage einen Kunststoff auf und ist bevorzugt thermisch isolierend ausgeführt. Dadurch kann eine einfache und kostengünstige Produktion und Montage der Einlage realisiert werden, und zwar selbst bei komplexen Geometrien der Einlage. Aufgrund der besonders niedrigen Wärmeleitfähigkeit von Kunststoffen kann die Einlage als einseitig isolierendes Element im Wandelement eingesetzt werden. Durch die Kunststoffeinlage wird eine einfache Montage und geringe Teileanzahl sowie geringe Kosten ermöglicht.

Verfahrensseitig wird die Aufgabe ferner mit einem Herstellungsverfahren für ein Wandelement gelöst.

Entsprechend wird ein Herstellungsverfahren vorgeschlagen, umfassend die Schritte des Erstellens der Grundplatte mittels eines Strangpressverfahrens, des Einschiebens der Einlage in den Strömungskanal der Grundplatte entlang des Strömungskanals und des Verschließens von verbleibenden Öffnungen. Dies hat den Vorteil, dass das Wandelement gemäß der vorliegenden Offenbarung durch ein im Vergleich zu Herstellungsverfahren handelsüblicher Wandelemente nur leicht abgeändertes Herstellungsverfahren hergestellt werden kann. Mithin können etablierte Herstellungsverfahren durch kleinere Anpassungen einfach modifiziert werden.

Vorteilhafterweise werden die verbleibenden Öffnungen der Grundplatte durch Schweißen oder Kleben verschlossen. Dadurch kann auf einfache Art und Weise eine dichte und dauerhafte Versiegelung der Grundplatte erzielt werden.

Die Aufgabe wird ferner mit einer Wandstruktur gelöst, die eine Vielzahl von Wandelementen gemäß der vorliegenden Offenbarung aufweist.

### Kurze Beschreibung der Figuren

Bevorzugte weitere Ausführungsformen der Erfindung werden durch die nachfolgende Beschreibung der Figuren näher erläutert. Dabei zeigen:
- Figur 1: ein Wandelement gemäß dem Stand der Technik in einer perspektivischen Ansicht;
- Figur 2: eine Seitenansicht eines Wandelements gemäß einer ersten Ausführungsform;
- Figur 3: eine Seitenansicht eines Wandelements gemäß einer weiteren Ausführungsform;
- Figur 4: eine Seitenansicht eines Wandelements gemäß einer weiteren Ausführungsform;
- Figur 5: eine Seitenansicht eines Wandelements gemäß einer weiteren Ausführungsform;
- Figur 6: eine Seitenansicht eines Wandelements gemäß einer weiteren Ausführungsform;
- Figur 7: eine Seitenansicht eines Wandelements gemäß einer weiteren Ausführungsform;
- Figur 8: eine Seitenansicht eines Wandelements gemäß einer weiteren Ausführungsform;
- Figur 9: eine Draufsicht auf eine Einlage gemäß einer weiteren Ausführungsform; und
- Figur 10: eine Draufsicht auf ein Wandelement, das eine Einlage nach der in Figur 9 gezeigten Ausführungsform zusammen mit der Grundplatte zeigt.

### Detaillierte Beschreibung bevorzugter Ausführungsbeispiele

im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

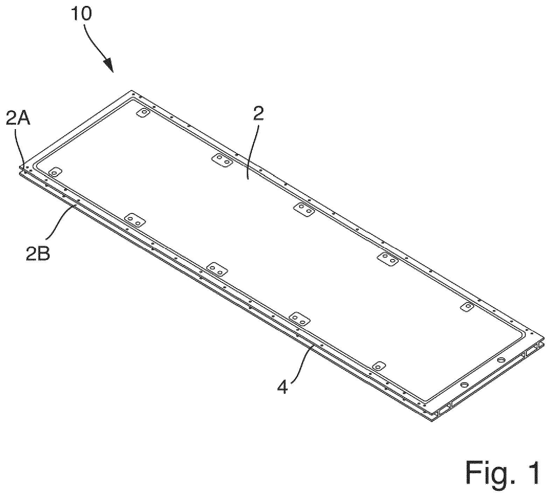

In Figur 1 ist schematisch ein Wandelement 10 zum Aufbau eines Gehäuses zur Aufnahme eines Energiespeichers in einer perspektivischen Ansicht gezeigt.

Das Wandelement 10 ist zur Kühlung eines nicht abgebildeten Energiespeichers mittels eines nicht gezeigten Kühlmediums geeignet. Das Wandelement 10 umfasst eine Grundplatte 2 sowie einen Strömungskanal 4, der innerhalb der Grundplatte 2 zur Durchströmung mit dem Kühlmedium 6 ausgebildet ist. Genauer gesagt ist der Strömungskanal 4 zwischen einer ersten Teilplatte 2A und einer zweiten Teilplatte 2B der Grundplatte 2 ausgebildet.

Die Grundplatte 2 kann durch Strangpressen hergestellt werden.

Der Strömungskanal 4 innerhalb der Grundplatte 2 weist dabei einen fertigungsbedingt vergleichsweise großen Strömungsquerschnitt auf. Dies hat zur Folge, dass im Strömungskanal 4 Totwassergebiete ausgebildet werden können und bei einer vorgegebenen Kühlmedienströmung die Strömungsgeschwindigkeit relativ gering ist, wodurch der Wirkungsgrad der Kühlung reduziert ist. Dieser Wirkungsgrad soll durch die nachfolgend beschriebenen Ausführungsformen verbessert werden.

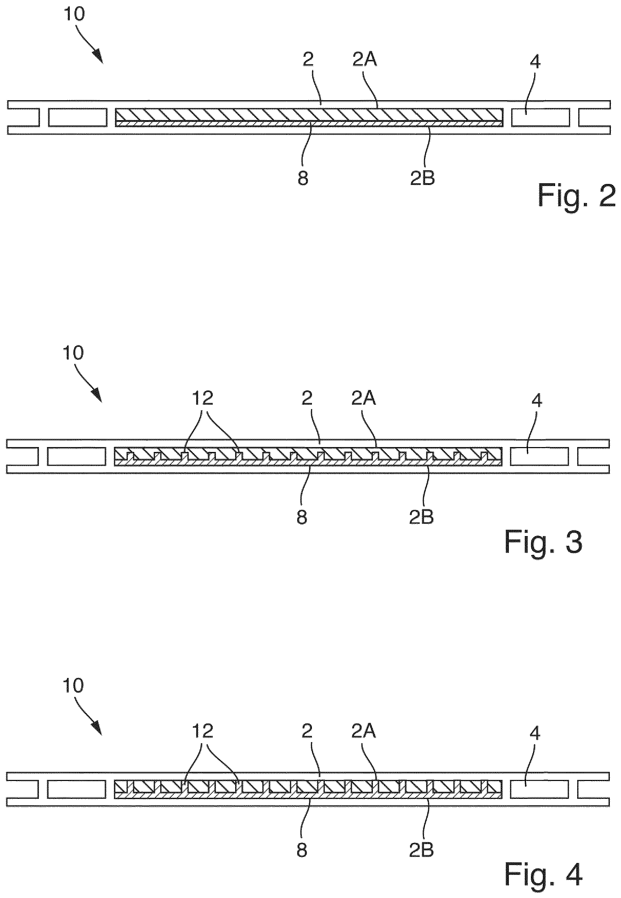

In Figur 2 ist eine Seitenansicht eines Wandelements 10 gemäß einer ersten Ausführungsform. Dabei ist eine Stirnfläche des Wandelements 10 gezeigt.

Das Wandelement 10 ist zur Kühlung eines nicht abgebildeten Energiespeichers mittels eines Kühlmediums 6 geeignet und umfasst eine Grundplatte 2. Innerhalb der Grundplatte 2 ist ein Strömungskanal mit einem Strömungsquerschnitt zur Durchströmung mit einem Kühlmedium 6 ausgebildet. Der Strömungskanal 4 erstreckt sich in der Abbildung der Figur 2 in die Zeichnungsebene hinein.

Im Strömungskanal 4 ist eine Einlage 8 zur Reduzierung des Strömungsquerschnitts angeordnet.

Die Reduzierung des Strömungsquerschnitts des Strömungskanals 4 erfolgt über die Volumenverdrängung durch die Einlage 8, was in der Schnittansicht anhand der reduzierten Höhe des Strömungsquerschnitts ersichtlich ist. In der abgebildeten Ausführungsform liegt die Einlage 8 an einer inneren Oberfläche der Grundplatte 2 an und der Strömungskanal 4 ist zwischen der ersten Teilplatte 2A der Grundplatte 2 und der Einlage 8 ausgebildet.

Die Einlage 8 wird in den Strömungskanal 4 der Grundplatte 2 entlang des Strömungskanals 4 eingeschoben. Durch die Volumenverdrängung der Einlage 8 werden Totwassergebiete eliminiert sowie der Strömungsquerschnitt verringert, so dass die Strömung des Kühlmediums 6 im Strömungskanal 4 verbessert wird und die Fließgeschwindigkeit bei gegebenen Volumenstrom erhöht wird.

Die Einlage 8 ist bevorzugt aus einem Kunststoffmaterial ausgebildet, beispielsweise als Spritzgussteil oder Tiefziehteil. Die Grundplatte 2 ist bevorzugt aus einem metallischen Material ausgebildet, beispielsweise als Strangpressteil.

Durch die Verwendung eines metallischen Materials für die Grundplatte 2 kann eine gute Wärmeleitung zwischen dem an der Grundplatte 2 angeordneten Energiespeicher beziehungsweise den zu kühlenden Bauteilen und dem in dem Strömungskanal 4 geführten Kühlmedium 6 erreicht werden, so dass ein effizientes Kühlen erreicht werden kann.

Die als Kunststoffteil ausgebildete Einlage 8 hingegen ist bevorzugt als Isolator ausgebildet. Entsprechend kann durch das Vorhandensein der Einlage 8 das Wandelement 10 nach außen hin thermisch isoliert werden, d.h. die Teilplatte 2B wird weniger gekühlt. Dadurch wird die Kühlleistung auf der innen gelegenen Seite der Grundplatte 2 verbessert und der thermische Wirkungsgrad vergrößert.

In der in Figur 2 abgebildeten Ausführungsform sind die Stirnflächen der Grundplatte 2 noch nicht verschlossen. Das Verschließen dieser Öffnungen erfolgt stoffschlüssig, formschlüssig oder kraftschlüssig, z.B. mittels Schweißen und/oder Kleben und/oder Verschrauben und oder mittels einer Nietverbindung in einem Verfahrensschritt, der auf das Einschieben der Einlage 8 in den Strömungskanal 4 folgt.

In Figur 3 ist eine Seitenansicht eines Wandelements 10 gemäß einer weiteren Ausführungsform offenbart. Wie auch die in Figur 2 offenbarten Ausführungsform ist das Wandelement 10 der vorliegenden Ausführungsform zur Kühlung eines nicht abgebildeten Energiespeichers mittels eines Kühlmediums 6 geeignet und umfasst eine Grundplatte 2. Weiterhin umfasst das Wandelement 10 ebenfalls einen Strömungskanal 4, der innerhalb der Grundplatte 2 zur Durchströmung mit einem Kühlmedium 6 ausgebildet ist. Dabei ist im Strömungskanal 4 eine Einlage 8 zur Reduzierung des Strömungsquerschnitts angeordnet.

Die Reduzierung des Strömungsquerschnitts im Strömungskanal 4 erfolgt über die Volumenverdrängung der Einlage 8, was anhand der reduzierten Höhe des Strömungsquerschnitts ersichtlich ist. Darüber hinaus weist die Einlage 8 Turbulatoren 12 zum Erzeugen von Turbulenzen im Kühlmedium 6 auf. In der in Figur 3 abgebildeten Ausführungsform weisen die Turbulatoren 12 Vorsprünge auf, die teilweise in den Strömungskanal 4 hineinragen.

Die Einlage 8 wird in den Strömungskanal 4 der Grundplatte 2 eingeschoben. Die Turbulatoren 12 sind dabei einstückig in der Einlage 8 integriert. Dadurch sind keine weiteren Teile erforderlich. Ferner sind dadurch beliebige Geometrie in von Turbulatoren 12 möglich. Die Turbulatoren 12 beeinflussen die Strömung im Strömungskanals 4.

Durch die Volumenverdrängung der Einlage 8 werden Totwassergebiete eliminiert sowie die Strömung im Strömungskanals 4 verbessert. Ferner wird durch das Vorhandensein der Einlage 8 das Wandelement 10 nach außen hin thermisch isoliert, d. h. die Teilplatte 2B wird weniger gekühlt. Dadurch wird die Kühlleistung verbessert und der thermische Wirkungsgrad vergrößert. Durch die Turbulatoren 12 kann weiterhin erreicht werden, dass das Kühlmedium beim Durchfließen des Strömungskanals 4 verwirbelt wird, wodurch eine bessere Anbindung der Kühlleistung an die Grundplatte und damit der thermische Wirkungsgrad noch weiter gesteigert werden kann.

In der in Figur 3 abgebildeten Ausführungsform sind die Seiten der Grundplatte 2 noch nicht verschlossen. Das Verschließen dieser Öffnungen erfolgt mittels Schweißen und/oder Kleben in einem Verfahrensschritt, der auf das Einschieben der Einlage 8 in den Strömungskanal 4 folgt.

Figur 4 offenbart eine Seitenansicht eines Wandelements 10, jedoch in einer abgewandelten Ausführungsform. Wie auch in den in Figur 2 und Figur 3 offenbarten Ausführungsform ist das Wandelement 10 der vorliegenden Ausführungsform ebenfalls zur Kühlung eines nicht abgebildeten Energiespeichers mittels eines Kühlmediums 6 geeignet und umfasst eine Grundplatte 2. Ebenso umfasst das Wandelement 10 gemäß der Ausführungsform von Figur 4 ebenfalls einen Strömungskanal 4, der innerhalb der Grundplatte 2 zur Durchströmung mit einem Kühlmedium 6 ausgebildet ist. Dabei ist im Strömungskanal 4 ebenfalls eine Einlage 8 zur Reduzierung des Strömungsquerschnitts angeordnet.

Die Einlage 8 weist Unterteilungen 13 auf, die direkt in die Einlage 8 integriert sind und die den verbleibenden Raum des Strömungskanals 4 in einzelne Strömungskanäle unterteilen. Die auf diese Weise entstehenden Strömungskanäle können parallel zueinander geführt werden. Durch die Dimensionierung der sich auf diese Weise ergebenden Strömungskanäle lässt sich der insgesamt wirksame Strömungsquerschnitt anpassen und damit die Strömungsgeschwindigkeit der jeweiligen Anwendung anpassen.

Mit anderen Worten unterscheidet sich die in Figur 4 abgebildete Ausführungsform von der Ausführungsform wie in Figur 3 abgebildet dahingehend, dass die Einlage 8 Unterteilungen 13 mit durchgehenden Strukturen aufweist, die sich gemeinsam bis zur gegenüberliegenden Teilplatte 2A erstrecken. Die Turbulatoren 12 der Figur 3 hingegen erstrecken sich nicht durchgehend bis zur gegenüberliegenden Teilplatte 2A, sondern lassen immer noch einen Durchtritt an Kühlmedium zu. Weiterhin sind die Turbulatoren 12 über die Länge des Strömungskanals 4 nicht zwingend durchgehend ausgebildet. Die Unterteilungen 13 hingegen, wenn sie zur Ausbildung von Strömungskanälen ausgebildet sind, erstrecken sich über die gesamte Länge des Strömungskanals 4. Damit lassen sich einzelne Strömungskanäle ausbilden, die gemäß der gewünschten beziehungsweise benötigten Kühlleistung in vorgegebenen Bereichen des Wandelements 10 ausgestaltet werden können und beispielsweise eine gewundene oder mäanderförmige Struktur haben können.

Ferner wird durch das Vorhandensein der Einlage 8 das Wandelement 10 nach außen hin thermisch isoliert, d. h. die Teilplatte 2B wird weniger gekühlt. Dadurch wird die Kühlleistung verbessert und der thermische Wirkungsgrad vergrößert. In der in Figur 4 abgebildeten Ausführungsform sind die Seiten der Grundplatte 2 noch nicht verschlossen. Das Verschließen dieser Öffnungen erfolgt mittels Schweißen und/oder Kleben in einem Verfahrensschritt, der auf das Einschieben der Einlage 8 in den Strömungskanal 4 folgt.

Alternativ oder ergänzend können einer nicht abgebildeten Ausführungsform die Turbulatoren 12 oder Unterteilungen 13 auch Einbuchtungen aufweisen. Gleichwohl können die Turbulatoren 12 oder Unterteilungen 13 andere durchgängige Strukturen aufweisen, insbesondere Drähte, Zylinder und/oder Oberflächenrauigkeiten.

Insbesondere können die in Figur 3 und/oder Figur 4 abgebildeten Turbulatoren 12 oder Unterteilungen 13 gezielt so ausgebildet sein, dass der im Kühlmedium 6 erzeugte Druckverlust bei Durchströmung des Strömungskanals 4 geringer als 10 % ist, vorzugsweise geringer als ein 1 %, verglichen mit dem Druckverlust, der beim Durchströmen des Strömungskanals 4 bei gleichem Volumenstrom von Kühlmedium 6 ohne Turbulatoren 12 oder Unterteilungen 13 vorliegt.

Den in den Figuren 2, 3 und 4 offenbarten Ausführungsformen ist gemein, dass die Einlage 8 an der Teilplatte 2B anliegt. Gleichwohl kann die Einlage 8 auch an der gegenüberliegenden Teilplatte 2A anliegen. Den besagten Ausführungsformen ist darüber hinaus gemein, dass die Einlage 8 seitlich zwischen die beiden Teilplatten 2A und 2B der Grundplatte 2 das Wandelements 10 eingeschoben werden kann.

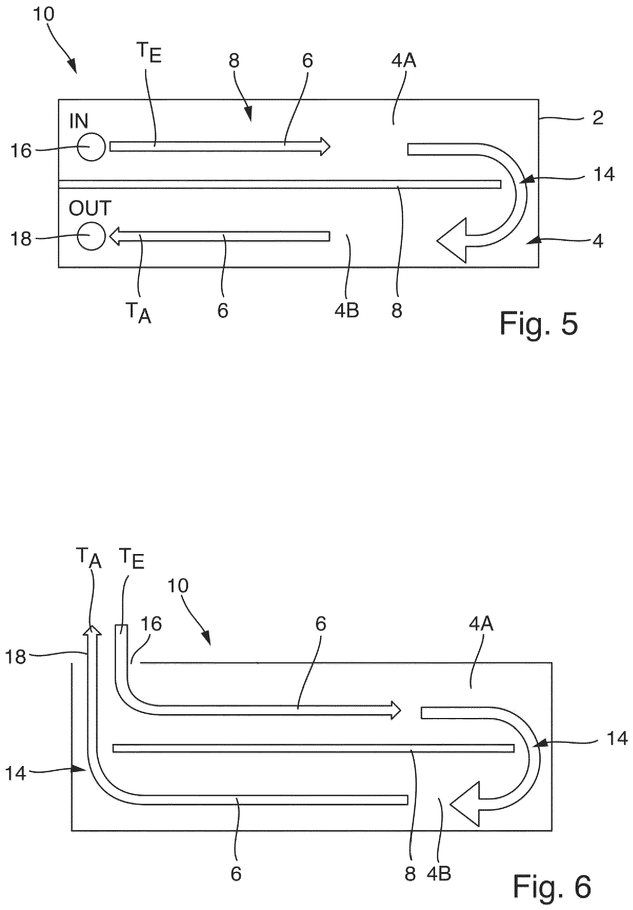

In Figur 5 wird eine weitere Ausführungsform des Wandelements 10 anhand einer Seitenansicht offenbart. Gemäß dieser Ausführungsform weist die Grundplatte 2 wiederum einen sich in die Zeichnungsebene hinein erstreckenden Strömungskanal 4 auf, in dem wiederum eine Einlage 8 eingebracht ist. Die Einlage 8 unterteilt in dieser Ausführungsform den Strömungskanal 4 in zwei übereinander angeordnete Teilkanäle 4A und 4B, die über ein Strömungsdurchtrittelement 14 in Form einer Aussparung in der Einlage 8 fluidisch miteinander verbunden sind. Mit anderen Worten kann das Kühlmedium 6 über das Strömungsdurchtrittelement 14 von dem ersten Teilkanal 4A in den zweiten Teilkanal 4B strömen.

Das Kühlmedium 6 strömt über einen Einlass 16 in den Strömungskanal 4 der Grundplatte 2 mit einer Eingangstemperatur T_{E} ein. Das zunächst kalte Kühlmedium 6 strömt dann entlang der Einlage 8 durch den oberen Teilkanal 4A des Strömungskanals 4 und erwärmt sich dabei aufgrund von Wärmetransportprozessen und wird am Strömungsdurchtrittelement 14 in den unteren Teilkanal 4B umgelenkt. Das Kühlmedium 6 strömt dann im unteren Teilkanal 4B im Gegenstrom zu dem im oberen Teilkanal 4B fließenden Kühlmedium 6 zu einem Auslass 18 und letztlich aus dem Strömungskanal 4 hinaus. Das Wandelement 10 und insbesondere das Strömungsdurchtrittelement 14 sind dabei so dimensioniert, dass das Kühlmedium 6 bei einem vorgegebenen Volumenstrom eine gewünschte Strömungsgeschwindigkeit erreicht, um einen effizienten und homogenen Wärmetransport zu ermöglichen. Am Ende des Teilkanals 4B wird dann eine Austrittstemperatur T_{A} des Kühlmediums 6 erreicht. Der Einlass 16 und der Auslass 18 sind als separate Kanäle ausgeführt.

Wird das Wandelement 10 als Gehäuseteil eines Gehäuses zur Aufnahme eines Energiespeichers verwendet, so kann an der jeweiligen Außenseite des Gehäuses - beispielsweise auf der Seite, auf welcher der Teilkanal 4B angeordnet ist, bereits ein Abführen eines Teils der von dem Kühlmedium 6 transportierten Wärmemenge an die Umgebung stattfinden.

Bei dieser Ausführungsform kann gegebenenfalls auf einen externen Wärmetauscher komplett verzichtet werden. Die Wärmeübergangsprozesse im inneren und zur Umgebung hin können in den Teilkanälen 4A und 4B durch optimierte Geometrie der Kühlkanäle und entsprechende Strömungsgeschwindigkeit (mittels einer eingebauten Pumpe) optimiert werden. Hier wird also ein geschlossener Kreislauf in der beschriebenen Kühlplatte beschrieben.

In einer Variante dieser Ausführungsform kann durch die Kapillarwirkung von sogen. "Heatpipes" auch die Umwälzung des Kühlmittels dargestellt werden, so dass auch die Pumpe entfallen kann.

In einer weiteren Variante dieser Ausführungsform wird die Umwälzung des Kühl- oder Kältemittels durch Verdampfen auf der innenliegenden, heißen Seite und Rück-Kondensation auf der außenliegenden, kalten Seite bewirkt (sogen. Verdampfungskühlung). Dadurch kann eine Naturkonvektion von Kühlmittel im Wärmetauscher realisiert werden.

Die Einlage 8 wird in den Strömungskanal 4 der Grundplatte 2 eingeschoben. Die Strömungsdurchtrittelemente 14 sind dabei direkt in der Einlage 8 integriert. Dadurch sind keine weiteren Teile erforderlich, wodurch die Montage aufgrund der geringen Teileanzahl einfacher wird und die Kosten geringgehalten werden können. Ferner sind dadurch beliebige Geometrie in von Strömungsdurchtrittelementen 14 möglich.

In Figur 6 wird eine weitere Ausführungsform des Wandelements 10 anhand einer weiteren Seitenansicht offenbart. Gemäß dieser Ausführungsform weist die Grundplatte 2 eine Einlage 8 auf. Die Einlage 8 weist Strömungsdurchtrittelemente 14 in Form von Ausnehmungen zur Umlenkung des Kühlmediums 6 auf.

Die Strömungsdurchtrittelemente 14 der Einlage 8 sind dabei so ausgebildet, dass der Strömungskanal 4 in zwei fluidisch verbundene Teilkanäle 4A und 4B unterteilt wird, sodass beim Durchströmen des Fluidkanals 4 mit Kühlmediums 6 das Kühlmedium 6 von dem ersten Teilkanal 4A in den zweiten Teilkanal 4B strömt.

Das Kühlmedium 6 strömt über einen Einlass 16 in den Strömungskanal 4 der Grundplatte 2 mit einer Eingangstemperatur T_{E} ein. Das zunächst kalte Kühlmedium 6 strömt im weiteren Verlauf entlang der Einlage 8 durch den Strömungskanal 4 und erwärmt sich aufgrund von Wärmetransportprozessen. Die Strömungsdurchtrittelemente 14 sind dabei so ausgelegt, dass das Kühlmedium 6 am Ende des Strömungskanals 4 eine Austrittstemperatur T_{A} erreicht. Am Ende des Strömungskanals 4 wird das Kühlmedium 6 über das Strömungsdurchtrittelement 14 umgelenkt und strömt im Gegenstrom zum kalten Kühlmedium 6 zurück. Der Rückfluss im Gegenstrom erfolgt dabei parallel.

Die in Figur 6 abgebildete Ausführungsform unterscheidet sich dahingehend von der in Figur 5 offenbarten Ausführungsformen, dass der Einlass 16 und der Auslass 18 als eine gemeinsame Öffnung ausgeführt sind, die an einer Seite der Grundplatte 2 angeordnet ist. Dadurch wird das Kühlmedium 6 seitlich aus der Grundplatte 2 des Wandelement 10 ein beziehungsweise ausgetragen.

Die Einlage 8 wird wieder in den Strömungskanal 4 eingeschoben. Die Strömungsdurchtrittelemente 14 sind dabei direkt in der Einlage 8 integriert. Dadurch sind keine weiteren Teile erforderlich, wodurch die Montage aufgrund der geringen Teileanzahl einfacher wird und die Kosten geringgehalten werden können. Ferner sind dadurch beliebige Geometrie in von Strömungsdurchtrittelemente 14 möglich. Die Strömungsdurchtrittelemente 14 beeinflussen die Strömung im Strömungskanal 4.

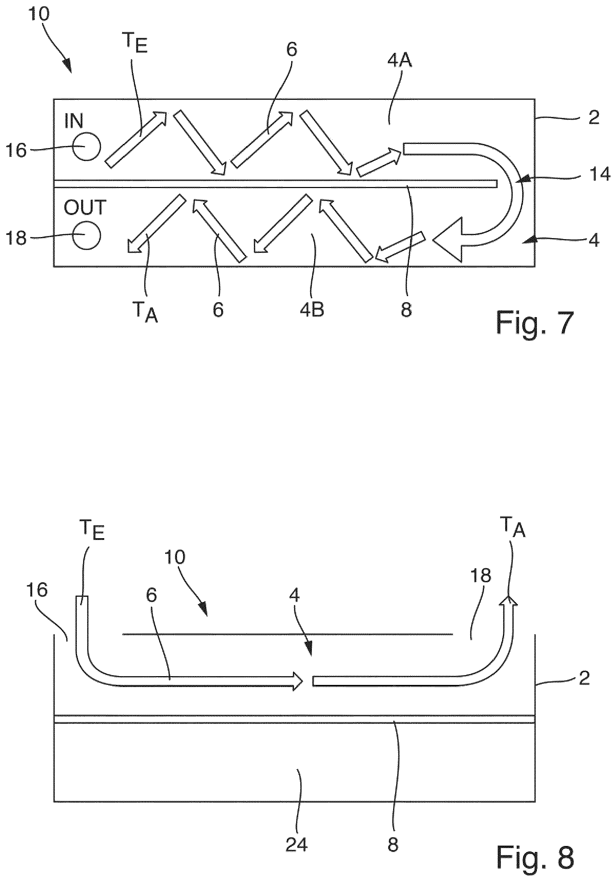

In Figur 7 wird eine weitere Ausführungsform des Wandelements 10 anhand einer Seitenansicht offenbart. Gemäß dieser Ausführungsform weist die Grundplatte 2 eine Einlage 8 auf. Die Einlage 8 weist ein Strömungsdurchtrittelement 14 zur Umlenkung des Kühlmediums 6 auf.

Das Kühlmedium 6 strömt über einen Einlass 16 in den Strömungskanal 4 der Grundplatte 2 mit einer Eingangstemperatur T_{E} ein. Das zunächst kalte Kühlmedium 6 strömt im weiteren Verlauf entlang der Einlage 8 durch den Strömungskanal 4 und erwärmt sich aufgrund von Wärmetransportprozessen. Am Ende des Strömungskanals 4 wird das Kühlmedium 6 über das Strömungsdurchtrittelement 14 umgelenkt und strömt im Gegenstrom zum kalten Kühlmedium 6 zum Auslass 18 und letztlich aus diesem heraus. Dabei ist der Einlass 16 und der Auslass 18 orthogonal zur Oberfläche der Grundplatte 2 angeordnet. Der Einlass 16 und der Auslass 18 sind als separate Kanäle ausgeführt. Das Strömungsdurchtrittelement 14 ist dabei so ausgelegt, dass das Kühlmedium 6 am Ende des Strömungskanals 4B eine Austrittstemperatur T_{A} erreicht.

Die in Figur 7 offenbarte Ausführungsform ist bis auf die Ausgestaltung des Strömungsdurchtrittelements 14 mit der in Figur 5 offenbarten Ausführungsform identisch. In der nun diskutierten Ausführungsform ist das Strömungsdurchtrittelement 14 so ausgebildet, dass in beiden Teilkanälen 4A und 4B solch eine Umlenkung des Kühlmediums 6 erzeugt wird, dass ein beim Durchströmen ausgebildeter Hauptströmungspfad (dargestellt als Pfeile) des Kühlmediums 6 länger ist als die Länge des jeweiligen Teilkanals 4A und 4B.

In Figur 8 ist eine Seitenansicht eines Wandelements 10 gemäß einer weiteren Ausführungsform dargestellt. Gemäß dieser Ausführungsform weist die Grundplatte 2 eine Einlage 8 auf, welche die Grundplatte 2 in zwei fluidisch voneinander getrennte Bereiche unterteilt, nämlich in einen Strömungskanal 4 und einen Hohlraum 24.

Das Kühlmedium 6 strömt über einen Einlass 16 in den Strömungskanal 4 der Grundplatte 2 mit einer Eingangstemperatur T_{E} ein. Das zunächst kalte Kühlmedium 6 strömt im weiteren Verlauf entlang der Einlage 8 durch den Strömungskanal 4 und erwärmt sich aufgrund von Wärmetransportprozessen. Am Ende des Strömungskanals 4 erreicht das Kühlmedium 6 eine Austrittstemperatur T_{A} und wird bei einer Austrittstemperatur T_{A} aus dem Auslass 18 ausgeleitet. Der Einlass 16 und der Auslass 16 sind jeweils als separate Kanäle ausgeführt, die an einer Seite der Grundplatte 2 angeordnet sind.

Durch die Einlage 8 wird entsprechend der Querschnitt des Strömungskanals 4 in der Grundplatte 2 verringert, so dass eine vorgegebene Strömungsgeschwindigkeit des Kühlmediums 6 in dem Strömungskanal 4 bei einem vorgegebenen Volumenstrom erreicht werden kann. Weiterhin kann mittels des Hohlraums 24 eine thermische Isolierung der Grundplatte 2 gegenüber der Außenseite erreicht werden.

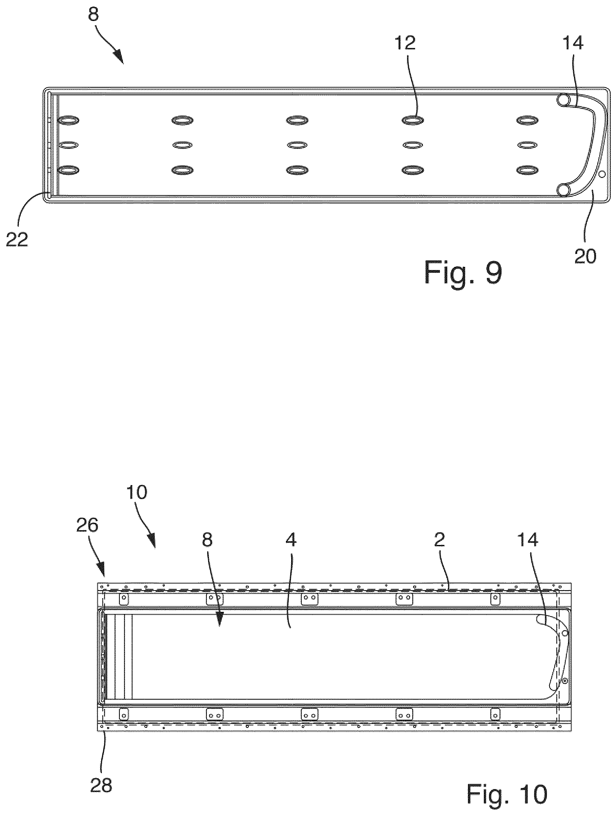

In Figur 9 ist eine Draufsicht auf eine Einlage 8 gemäß einer anderen Ausführungsform der Einlage 8 offenbart. Die Einlage 8 weist Turbulatoren 12 zum Erzeugen von Turbulenzen im Kühlmedium auf, wobei die Turbulatoren 12 als Vorsprünge ausgebildet sind. Dabei sind die Turbulatoren 12 als z.B. ovale Vorsprünge ausgebildet, wodurch der im Kühlmedium erzeugte Druckverlust beim Durchströmen des Strömungskanals 4 geringer als 10 % ist, insbesondere weniger als 1 %, verglichen mit dem Druckverlust, der beim Durchströmen des Strömungskanals 4 bei gleichem Volumenstrom von Kühlmediums ohne Turbulatoren 12 vorliegen würde. In einer weiteren, nicht abgebildeten Ausführungsform sind die Turbulatoren als Vertiefungen und/oder Ausbuchtungen ausgebildet.

Die Einlage 8 gemäß der in Figur 9 offenbarten Ausführungsform weist darüber hinaus ein Strömungsdurchtrittelement 14 zur Umlenkung des Kühlmediums auf. Dadurch kann ein druckverlustoptimierter Einlass von Kühlmedium gewährleistet werden.

Ferner mündet der Einlass 16 und der Auslass 18 im Inneren der Grundplatte 2 jeweils in einen Einlasskanal 20 beziehungsweise in einen Auslasskanal 22. Dabei sind der Einlasskanal 20 und der Auslasskanal 22 teilweise durch die Einlage 8 ausgebildet.

Figur 10 ist eine Draufsicht auf ein Wandelement 10. Figur 10 zeigt eine Einlage 8 nach der in Figur 9 gezeigten Ausführungsform zusammen mit der Grundplatte 2. Die Grundplatte 2 des Wandelements 10 weist dabei eine im Wesentlichen rechteckige Grundfläche auf. Ferner weist die Grundplatte 2 an einer Außenseite 26 Befestigungsmittel 28 auf. Die Grundplatte 2 kann mittels eines Strangpressverfahrens hergestellt sein, insbesondere mittels eines

Aluminiumstrangpressverfahrens. Die Einlage 8 des Wandelements 10 kann aus einem Kunststoff hergestellt sein oder einen Kunststoff aufweisen.

Zum Herstellen eines Wandelements gemäß des in Figur 10 abgebildeten Wandelements 10 wird in einem ersten Schritt die Grundplatte 2 mittels eines Strangpressverfahrens hergestellt und in einem zweiten Schritt wird die Einlage 8 in die Grundbauplatte 2 eingeschoben. In einem dritten Schritt werden die verbleibenden Öffnungen versiegelt, insbesondere mittels Schweißen und/oder Kleben. Soweit anwendbar, können alle einzelnen Merkmale, die in den Ausführungsbeispielen dargestellt sind, miteinander kombiniert und/oder ausgetauscht werden, ohne den Bereich der Erfindung zu verlassen. verlassen, welcher durch die anhängigen Ansprüche definiert ist.

### Bezugszeichenliste

- T_{A}: Austrittstemperatur
- T_{E}: Eingangstemperatur
- 2: Grundplatte
- 2A, 2B: Teilplatte
- 4: Strömungskanal
- 4A, 4B: Teilkanal
- 6: Kühlmedium
- 8: Einlage
- 10: Wandelement
- 12: Turbulator
- 13: Unterteilung
- 14: Strömungsdurchtrittelement
- 16: Einlass
- 18: Auslass
- 20: Einlasskanal
- 22: Auslasskanal
- 24: Hohlraum
- 26: Außenseite
- 28: Befestigungsmittel

## Patentansprüche

1. Wandelement (10) zum Aufbau eines Gehäuses zur Aufnahme eines Energiespeichers oder zum Erstellen einer Kühlplatte, umfassend eine Grundplatte (2) und einen in der Grundplatte (2) ausgebildeten Strömungskanal (4) mit einem Strömungsquerschnitt zur Durchströmung mit einem Kühlmedium (6),
**gekennzeichnet durch**
eine im Strömungskanal (4) angeordnete Einlage (8) zur Reduzierung des Strömungsquerschnitts und zur Erhöhung der Fließgeschwindigkeit des Kühlmediums (6) in dem Strömungsquerschnitt.

2. Wandelement (10) nach Anspruch 1, **dadurch gekennzeichnet, dass** die Einlage (8) Turbulatoren (12) zum Erzeugen von Turbulenzen im Kühlmedium (6) aufweist, wobei die Turbulatoren (12) vorzugsweise Vorsprünge und/oder Einbuchtungen aufweisen, und/oder wobei vorzugsweise die Turbulatoren (12) durchgängige Strukturen aufweisen, insbesondere Drähte, Zylinder und/oder Oberflächenrauigkeiten, wobei die Turbulatoren (12) bevorzugt einstückig mit der Einlage (8) ausgebildet sind.

3. Wandelement (10) nach Anspruch 2, **dadurch gekennzeichnet, dass** die Turbulatoren (12) gezielt so ausgebildet sind, dass der durch die Turbulatoren (12) im Kühlmedium (6) erzeugte Druckverlust beim Durchströmen des Strömungskanals (4) geringer als 10 % ist, vorzugsweise geringer als 1 %, verglichen mit dem Druckverlust, der beim Durchströmen des Strömungskanals (4) bei gleichem Volumenstrom von Kühlmedium (6) ohne Turbulatoren (12) vorliegt.

4. Wandelement (10) nach einem der vorherigen Ansprüche, **dadurch gekennzeichnet, dass** die Einlage (8) zumindest ein Strömungsdurchtrittelement (14) zur Umlenkung des Kühlmediums (6) aufweist.

5. Wandelement (10) nach Anspruch **4, dadurch gekennzeichnet, dass** die Einlage (8) zusammen mit dem mindestens einen Strömungsdurchtrittelement (14) den Strömungskanal (4) in zumindest zwei fluidisch miteinander verbundene Teilkanäle (4A; 4B) unterteilt, sodass beim Durchströmen des Strömungskanals (4) mit Kühlmedium (6) das Kühlmedium (6) von dem ersten Teilkanal (4A) in den zweiten Teilkanal (4B) strömt.

6. Wandelement (10) nach Anspruch 5, **dadurch gekennzeichnet, dass** die Einlage (8) ein Strömungsdurchtrittelement (14) aufweist, das dazu ausgebildet ist, innerhalb des zumindest einen Teilkanals (4A; 4B) solch eine Umlenkung des Kühlmediums (6) zu erzeugen, dass ein beim Durchströmen ausgebildeter Hauptströmungspfad des Kühlmediums (6) länger ist als die Länge des betreffenden Teilkanals (4A; 4B).

7. Wandelement (10) nach einem der vorherigen Ansprüche, **dadurch gekennzeichnet, dass** die Grundplatte (2) zwei parallel voneinander beabstandete Teilplatten (2A, 2B) aufweist und sich der Strömungskanal (4) zwischen den Teilplatten (2A, 2B) erstreckt.

8. Wandelement (10) nach einem der vorherigen Ansprüche, **dadurch gekennzeichnet, dass** die Grundplatte (2) ferner einen Einlass (16) und einen Auslass (18) aufweist, wobei der Einlass (16) und/oder der Auslass (18) orthogonal zur Oberfläche der Grundplatte (2) angeordnet ist.

9. Wandelement (10) nach Anspruch 8, **dadurch gekennzeichnet, dass** der Einlass (16) und/oder der Auslass (18) im Inneren der Grundplatte (2) in einen Einlasskanal (20) beziehungsweise Auslasskanal (22) münden, wobei der Einlasskanal (20) und/oder der Auslasskanal (22) zumindest teilweise durch die Einlage (8) ausgebildet ist.

10. Wandelement (10) nach einem der vorherigen Ansprüche, **dadurch gekennzeichnet, dass** die Einlage (8) im Strömungskanal (4) Hohlräume (24) ausbildet, die nicht von Kühlmedium (6) durchströmt werden.

11. Wandelement (10) nach einem der vorherigen Ansprüche, **dadurch gekennzeichnet, dass** die Einlage (8) mindestens eine Unterteilung (13) aufweist, die gemeinsam mit der Grundplatte (2) einen separaten Strömungskanal im Strömungskanal (4) ausbildet, wobei die Unterteilung (13) bevorzugt einteilig mit der Einlage (8) ausgebildet ist.

12. Wandelement (10) nach einem der vorherigen Ansprüche, **dadurch gekennzeichnet, dass** die Grundplatte (2) als Strangpressteil ausgebildet ist, bevorzugt als Aluminiumstrangpressteil.

13. Wandelement (10) nach einem der vorherigen Ansprüche, **dadurch gekennzeichnet, dass** die Einlage (8) einen Kunststoff aufweist und bevorzugt thermisch isolierend ausgeführt ist.

14. Herstellungsverfahren eines Wandbauteils (10) nach einem der Ansprüche 1 bis 13, **gekennzeichnet durch** die Schritte umfassend
Herstellen der Grundplatte (2) mittels eines Strangpressverfahrens,
Einschieben der Einlage (8) in den Strömungskanal (4) der Grundplatte (2) entlang des Strömungskanals (4) und
Verschließen von verbleibenden Öffnungen.

15. Wandstruktur (100) umfassend eine Vielzahl von Wandbauteilen (10) nach einem der Ansprüche 1 bis 13.

## Claims

1. A wall element (10) for construction of a housing to accommodate an energy storage device or for forming a cooling plate, comprising a base plate (2) and a flow channel (4) formed in the base plate (2) with a flow cross-section for a cooling medium (6) to flow through, **characterized by**
an inlay (8) arranged in the flow channel (4) for reducing the flow cross-section and for increasing the flow velocity of the cooling medium (6) within the flow cross-section.

2. The wall element (10) according to claim 1, **characterized in that** the inlay (8) comprises turbulators (12) for generating turbulence in the cooling medium (6), wherein the turbulators (12) preferably comprise projections and/or indentations, and/or wherein the turbulators (12) preferably comprise continuous structures, in particular wires, cylinders, and/or surface roughnesses, wherein the turbulators (12) are preferably formed integrally with the inlay (8).

3. The wall element (10) according to claim 2, **characterized in that** the turbulators (12) are specifically formed such that the pressure loss generated by the turbulators (12) in the cooling medium (6) as it flows through the flow channel (4) is less than 10%, preferably less than 1%, compared to the pressure loss that occurs when the cooling medium (6) flows through the flow channel (4) at the same volumetric flow rate without the turbulators (12).

4. The wall element (10) according to any of the preceding claims, **characterized in that** the inlay (8) comprises at least one flow passage element (14) for deflecting the cooling medium (6).

5. The wall element (10) according to claim 4, **characterized in that** the inlay (8)**,** together with the at least one flow passage element (14)**,** divides the flow channel (4) into at least two fluidically interconnected subchannels (4A; 4B), such that the cooling medium (6) flows from the first subchannel (4A) into the second subchannel (4B), when the cooling medium (6) flows through the flow channel (4).

6. The wall element (10) according to claim 5, **characterized in that** the inlay (8) comprises a flow passage element (14) that is configured to produce a deflection of the cooling medium within the at least one subchannel (4A; 4B) such that a main flow path of the cooling medium (6) formed upon flowing through is longer than the length of the respective subchannel (4A; 4B).

7. The wall element (10) according to any of the preceding claims, **characterized in that** the base plate (2) comprises two subplates (2A, 2B) that are spaced apart and parallel to one another and wherein the flow channel (4) extends between the subplates (2A, 2B).

8. The wall element (10) according to any of the preceding claims, **characterized in that** the base plate (2) further comprises an inlet (16) and an outlet (18), wherein the inlet (16) and/or the outlet (18) is arranged orthogonal to the surface of the base plate (2).

9. The wall element (10) according to claim 8, **characterized in that** the inlet (16) and/or the outlet (18) open into an inlet channel (20) or an outlet channel (22), respectively, inside the base plate (2), wherein the inlet channel (20) and/or the outlet channel (22) is formed at least partially by the inlay (8).

10. The wall element (10) according to any of the preceding claims, **characterized in that** the inlay (8) forms cavities (24) within the flow channel (4) through which the cooling medium (6) does not flow.

11. The wall element (10) according to any of the preceding claims, **characterized in that** the inlay (8) comprises at least one subdivision (13) which, together with the base plate (2), forms a separate flow channel within the flow channel (4), wherein the subdivision (13) is preferably formed as a single piece with the inlay (8).

12. The wall element (10) according to any of the preceding claims, **characterized in that** the base plate (2) is formed as an extruded part, preferably as an aluminium extrusion.

13. The wall element (10) according to any of the preceding claims, **characterized in that** the inlay (8) comprises a plastic and is preferably thermally insulating.

14. A method of manufacturing a wall element (10) according to any of claims 1 to 13, **characterized by** the steps comprising
manufacturing the base plate (2) by means of an extrusion process,
inserting the inlay (8) into the flow channel (4) of the base plate (2) along the flow channel (4), and
closing of remaining openings.

15. A wall structure (100) comprising a plurality of wall elements (10) according to any of claims 1 to 13.

## Revendications

1. Élément de paroi (10) pour la construction d'un boîtier destiné à loger un dispositif de stockage d'énergie ou à former une plaque de refroidissement, comprenant une plaque de base (2) et un canal d'écoulement (4) formé dans la plaque de base (2) et présentant une section transversale d'écoulement permettant le passage d'un fluide de refroidissement (6), **caractérisé par**
un insert (8) disposé dans le canal d'écoulement (4) pour réduire la section d'écoulement et pour augmenter la vitesse d'écoulement du fluide de refroidissement (6) dans ladite section d'écoulement.

2. L'élément de paroi (10) selon la revendication 1, **caractérisé en ce que** l'insert (8) comprend des turbulateurs (12) destinés à générer de la turbulence dans le fluide de refroidissement (6), les turbulateurs (12) comprenant de préférence des saillies et/ou des renfoncements, et/ou les turbulateurs (12) comprenant de préférence des structures continues, en particulier des fils, des cylindres et/ou des rugosités de surface, les turbulateurs (12) étant de préférence formés d'un seul tenant avec l'insert (8).

3. L'élément de paroi (10) selon la revendication 2, **caractérisé en ce que** les turbulateurs (12) sont spécifiquement formés de telle sorte que la perte de charge générée par les turbulateurs (12) dans le fluide de refroidissement (6) lorsqu'il s'écoule à travers le canal d'écoulement (4) soit inférieure à 10 %, de préférence inférieure à 1 %, par rapport à la perte de charge qui se produit lorsque le fluide de refroidissement (6) s'écoule à travers le canal d'écoulement (4) au même débit volumétrique sans les turbulateurs (12).

4. L'élément de paroi (10) selon l'une quelconque des revendications précédentes, **caractérisé en ce que** l'insert (8) comprend au moins un élément de passage d'écoulement (14) destiné à dévier le fluide de refroidissement (6).

5. L'élément de paroi (10) selon la revendication 4, **caractérisé en ce que** l'insert (8)**,** conjointement avec le au moins un élément de passage d'écoulement (14)**,** divise le canal d'écoulement (4) en au moins deux sous-canaux interconnectés sur le plan fluidique (4A ; 4B), de telle sorte que le fluide de refroidissement (6) s'écoule du premier sous-canal (4A) vers le deuxième sous-canal (4B) lorsque le fluide de refroidissement (6) s'écoule à travers le canal d'écoulement (4).

6. L'élément de paroi (10) selon la revendication 5, **caractérisé en ce que** l'insert (8) comprend un élément de passage d'écoulement (14) qui est configuré pour produire une déviation du fluide de refroidissement à l'intérieur du au moins un sous-canal (4A ; 4B) de telle sorte qu'un trajet d'écoulement principal du fluide de refroidissement (6) formé lors de son passage soit plus long que la longueur du sous-canal respectif (4A ; 4B).

7. L'élément de paroi (10) selon l'une quelconque des revendications précédentes, **caractérisé en ce que** la plaque de base (2) comprend deux sous-plaques (2A, 2B) espacées l'une de l'autre et parallèles entre elles, dans lequel le canal d'écoulement (4) s'étend entre les sous-plaques (2A, 2B).

8. L'élément de paroi (10) selon l'une quelconque des revendications précédentes, **caractérisé en ce que** la plaque de base (2) comprend en outre une entrée (16) et une sortie (18), l'entrée (16) et/ou la sortie (18) étant disposées orthogonalement à la surface de la plaque de base (2).

9. L'élément de paroi (10) selon la revendication 8, **caractérisé en ce que** l'entrée (16) et/ou la sortie (18) débouchent respectivement dans un canal d'entrée (20) ou un canal de sortie (22) à l'intérieur de la plaque de base (2), le canal d'entrée (20) et/ou le canal de sortie (22) étant formé au moins partiellement par l'insert (8).

10. L'élément de paroi (10) selon l'une quelconque des revendications précédentes, **caractérisé en ce que** l'insert (8) forme des cavités (24) à l'intérieur du canal d'écoulement (4) à travers lesquelles le fluide de refroidissement (6) ne s'écoule pas.

11. L'élément de paroi (10) selon l'une quelconque des revendications précédentes, **caractérisé en ce que** l'insert (8) comprend au moins une subdivision (13) qui, conjointement avec la plaque de base (2), forme un canal d'écoulement distinct à l'intérieur du canal d'écoulement (4), la subdivision (13) étant de préférence formée d'un seul tenant avec l'insert (8).

12. L'élément de paroi (10) selon l'une quelconque des revendications précédentes, **caractérisé en ce que** la plaque de base (2) est réalisée sous la forme d'une pièce extrudée, de préférence d'un profilé en aluminium extrudé.

13. L'élément de paroi (10) selon l'une quelconque des revendications précédentes, **caractérisé en ce que** l'insert (8) est constitué d'une matière plastique et est de préférence thermiquement isolant.

14. Procédé de fabrication d'un élément de paroi (10) selon l'une quelconque des revendications 1 à 13,
**caractérisé par** les étapes comprenant
la fabrication de la plaque de base (2) au moyen d'un procédé d'extrusion,
l'insertion de l'insert (8) dans le canal d'écoulement (4) de la plaque de base (2) le long dudit canal d'écoulement (4), et
la fermeture des ouvertures restantes.

15. Structure de paroi (100) comprenant une pluralité d'éléments de paroi (10) selon l'une quelconque des revendications 1 à 13.
